# FASCICULE DE BREVET EUROPEEN

(11) **EP 0 762 601 B1**
(45) Date de publication et mention de la délivrance du brevet: **24.10.2001**
(21) Numéro de dépôt: 96401721.4
(22) Date de dépôt: 02.08.1996
(51) Int. Cl.: H02K 1/24, H02K 1/27, H02K 9/06

(54) **Alternateur à structure de rotor perfectionnée, notamment pour véhicule automobile**
Verbesserter Wechselstromgeneratorlaüfer, insbesondere für Kraftwagen
Alternator with improved rotor structure, especially for motor vehicles

(30) Priorité: 02.08.1995 FR 9509426
(43) Date de publication de la demande: 12.03.1997
(73) Titulaire: VALEO EQUIPEMENTS ELECTRIQUES MOTEUR, 94000 Créteil (FR)
(72) Inventeur: Persyn, Jean-Marie, 77000 Melun (FR)
(74) Mandataire: Le Forestier, Eric

(56) Documents cités:
- FR-A- 2 609 583
- GB-A- 2 281 665
- US-A- 5 306 977
- US-A- 5 329 199

## Description

La présente invention concerne d'une façon générale les alternateurs notamment de véhicules automobiles, et plus particulièrement un perfectionnement aux alternateurs dits à ventilation interne.

Un alternateur de ce type comprend classiquement un rotor monté sur un arbre, ledit arbre étant monté pivotant dans deux demi-paliers ou demi-carters sur lesquels est monté le stator. Le rotor est flanqué de deux ventilateurs qui assurent, lors de la rotation, une ventilation et un refroidissement des organes de l'alternateur à travers des ouïes d'entrée et de sortie d'air formées dans le carter.

De façon classique, chaque ventilateur est réalisé par découpage et pliage de tôle d'acier, et est fixé sur le flanc respectif du rotor par soudage.

Cette approche connue souffre toutefois d'un certain nombre d'inconvénients.

Tout d'abord, le fait que ces ventilateurs soient réalisés en acier provoque des pertes de flux rotorique, avec en conséquence une diminution du rendement électrique de l'alternateur.

En outre l'opération de montage du rotor est fastidieuse, deux pièces séparées devant être rapportées, alignées et soudées sur les flancs des roues polaires du rotor.

Par ailleurs, on connaît par FR-A-2 609 583 un alternateur tel que défini dans le préambule de la revendication 1, qui permet un montage aisé et simple du rotor, avec un nombre de pièces réduit, et qui permet également de diminuer le coût global des ventilateurs dans un alternateur à ventilation interne, de réduire le bruit et d'assurer une protection du rotor contre les agents extérieurs.

On connaît également par GB-A-2 281 665 un alternateur dans lequel une pièce surmoulée entre les cornes polaires du rotor peut recevoir des aimants permanents de renforcement de flux.

La présente invention vise à combiner dans une même pièce, à des fins de simplification et d'économie, la réalisation de pales de ventilation et la réalisation d'un support pour de tels aimants permanents ; elle vise également à améliorer le rendement de alternateur en accroissant le flux rotorique et en particulier le couplage magnétique entre les aimants de renforcement de flux du rotor et le stator.

L'invention propose à cet effet un alternateur tel que défini dans la revendication 1.

Des aspects préférés, mais non limitatifs, de cet alternateur sont définis dans les revendications dépendantes.

D'autres aspects, buts et avantages de la présente invention apparaîtront mieux à la lecture de la description détaillée suivante de formes de réalisation préférées de celle-ci, donnée à titre d'exemple non limitatif et faite en référence aux dessins annexés, sur lesquels :
la figure 1 est une vue axiale en bout, à partir du bas de la figure 3, d'un ensemble de rotor et d'arbre d'alternateur selon une première forme de réalisation de l'invention,
la figure 2 est une vue axiale en bout d'une pièce appartenant à l'ensemble de la figure 1, à partir du bas de la figure 4,
la figure 3 est une vue en direction radiale de l'ensemble de la figure 1,
la figure 4 est une vue en direction radiale de la pièce de la figure 2,
la figure 5 est une vue axiale en bout, à partir du haut de la figure 3, de l'ensemble de cette même figure,
la figure 6 est une vue axiale en bout, à partir du haut de la figure 4, de la pièce des figures 2 et 4,
la figure 7 est une vue axiale en bout, à partir du bas de la figure 9, d'un ensemble de rotor et d'arbre d'alternateur selon une deuxième forme de réalisation de l'invention,
la figure 8 est une vue axiale en bout d'une pièce appartenant à l'ensemble de la figure 7, à partir du bas de la figure 11,
la figure 9 est une vue en direction radiale de l'ensemble de la figure 7, les figures 10a et 10b sont des vues en section selon les lignes A et B de la figure 11,
la figure 11 est une vue en direction radiale de la pièce de la figure 8,
la figure 12 est une vue axiale en bout, à partir du haut de la figure 9, de l'ensemble de cette même figure,
la figure 13 est une vue axiale en bout, à partir du haut de la figure 11, de la pièce des figures 8 et 11,
la figure 14 est une vue axiale en bout, à partir du bas de la figure 16, d'un ensemble de rotor et d'arbre d'alternateur selon une troisième forme de réalisation de l'invention,
la figure 15 est une vue axiale en bout d'une pièce appartenant à l'ensemble de la figure 14, à partir du bas de la figure 18,
la figure 16 est une vue en direction radiale de l'ensemble de la figure 14,
les figures 17a et 17b sont des vues en section selon les lignes A et B de la figure 18,
la figure 18 est une vue en direction radiale de la pièce de la figure 15,
la figure 19 est une vue axiale en bout, à partir du haut de la figure 16, de l'ensemble de cette même figure,
la figure 20 est une vue axiale en bout, à partir du haut de la figure 18, de la pièce des figures 15 et 18,
la figure 21 est une vue axiale en bout, à partir du bas de la figure 23, d'un ensemble de rotor et d'arbre d'alternateur selon une quatrième forme de réalisation de l'invention,
la figure 22 est une vue axiale en bout d'une pièce appartenant à l'ensemble de la figure 21, à partir du bas de la figure 25,
la figure 23 est une vue en direction radiale de l'ensemble de la figure 21,
les figures 24a et 24b sont des vues en section selon les lignes A et B de la figure 25,
la figure 25 est une vue en direction radiale de la pièce de la figure 22,
la figure 26 est une vue axiale en bout, à partir du haut de la figure 23, de l'ensemble de cette même figure,
la figure 27 est une vue axiale en bout, à partir du haut de la figure 25, de la pièce des figures 22 et 25,
la figure 28 est une vue axiale en bout, à partir du bas de la figure 30, d'un ensemble de rotor et d'arbre d'alternateur selon une cinquième forme de réalisation de l'invention,
la figure 29 est une vue axiale en bout d'une pièce appartenant à l'ensemble de la figure 28, à partir du bas de la figure 25,
la figure 30 est une vue en direction radiale de l'ensemble de la figure 28,
la figure 31 est une vue en direction radiale de la pièce de la figure 29,
la figure 32 est une vue axiale en bout, à partir du haut de la figure 30, de l'ensemble de cette même figure,
la figure 33 est une vue axiale en bout, à partir du haut de la figure 31, de la pièce des figures 29 et 31,
la figure 34 est une vue en section selon la ligne C-C de la figure 35 d'un ensemble d'éléments d'une pièce de rotor appartenant à un ensemble d'arbre et de rotor selon une sixième forme de réalisation de l'invention,
la figure 35 illustre ladite pièce par une vue en direction radiale,
la figure 36 est une vue en section selon la ligne D-D de l'un des éléments de la figure 34, et
la figure 37 est une vue partielle du rotor en direction radiale.

On observera à titre préliminaire que, d'une figure à l'autre, des éléments ou parties identiques ou similaires sont désignés dans la mesure du possible par les mêmes signes de référence, et ne seront pas décrits à chaque fois.

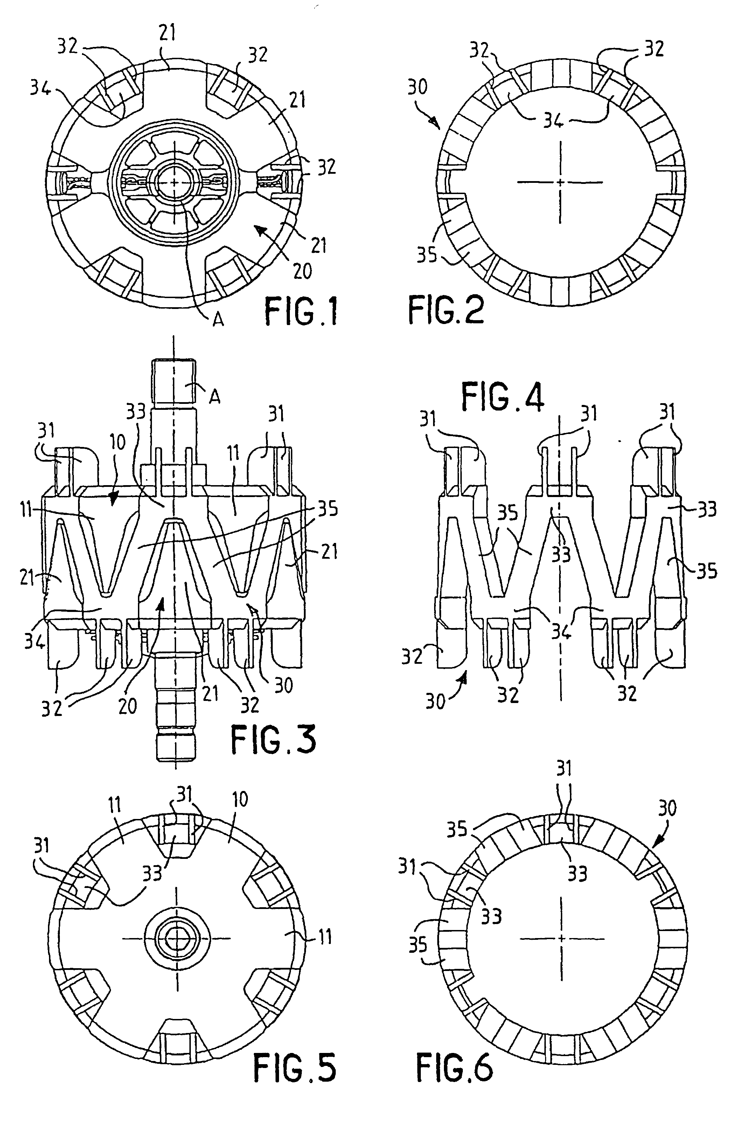

En référence tout d'abord aux figures 1 à 6, on a représenté un ensemble d'arbre et de rotor d'un alternateur à ventilateur. L'arbre est désigné par la référence A. Le rotor comprend, de façon classique en soi, deux roues polaires 10, 20 abritant entre elles un enroulement rotorique et comportant des cornes polaires 11, 21 de forme générale triangulaire, imbriquées les unes dans les autres en laissant entre elles, sur toute leur étendue axiale, des interstices de largeur essentiellement constante.

Selon l'invention, il est prévu deux ventilateurs constitués par une pièce unique, globalement indiquée par la référence 30, réalisée d'un seul tenant par moulage de matière plastique.

Cette pièce comprend une série de bras 35 orientées en oblique par rapport à des plans axiaux, définissant deux à deux un "V". Ces bras 35 se réunissent à leurs extrémités dans des régions de réunion, respectivement 33 et 34, disposés dans leur ensemble selon deux cercles centrés sur l'axe du rotor et espacés le long dudit axe.

A partir de ces régions de réunion s'étendent, par exemple dans des plans parallèles à l'axe du rotor, des pales, respectivement 31 et 32, s'étendant vers l'extérieur à partir desdits cercles.

L'ossature de la pièce 30, constitué par les bras 35 et les parties de réunion, est conformée et dimensionnée de telle sorte que chaque "V" formé par deux bras adjacents, d'un côté comme de l'autre, puisse recevoir lors de l'assemblage du rotor une corne polaire respective, 11 ou 21.

Par ailleurs, chaque bras 35 est conçu pour que sa surface extérieure soit dans l'affleurement des surfaces des cornes polaires, définissant ensemble un cylindre de révolution ayant pour axe celui du rotor.

De la sorte, la structure et l'assemblage de l'ensemble de rotor sont considérablement simplifiés dans la mesure où il suffit, après avoir placé le bobinage de rotor, de placer convenablement la pièce 30 et d'engager de part et d'autre de celle-ci les deux roues polaires 10 et 30, et de maintenir l'assemblage par des dispositions usuelles au niveau de l'arbre A de l'alternateur (par exemple boulonnage dans arbre A et serrage par épaulements), pour ainsi presser fermement la pièce 30 entre les deux roues polaires 10, 20.

On réalise ainsi un rotor flanqué de deux ventilateurs qui seront, après assemblage des deux demi-paliers, situés à l'intérieur de ces derniers pour réaliser une ventilation dite interne. Les pales 31 constituent le ventilateur dit avant (côté poulie d'entraînement), tandis que les pales 32 constituent le ventilateur dit arrière (côté redressement et régulation).

Bien entendu, la forme, le nombre et la répartition des pales 31 et 32 peuvent être tout à fait quelconques, les seules contraintes étant que ces pales doivent s'étendre à partir des régions de réunion 33, 34 et ne pas faire obstacle à l'engagement axial des deux roues polaires 10, 20 de part et d'autre de la pièce 30.

On comprend en outre, que, du fait que la surface extérieure de contour cylindrique du rotor est rendue plus régulière de par la présence des bras 35 remplissant les interstices entre cornes polaires, les turbulences de l'air entre le rotor et le stator lors de la rotation de l'alternateur, et donc les bruits de fonctionnement, sont sensiblement réduits.

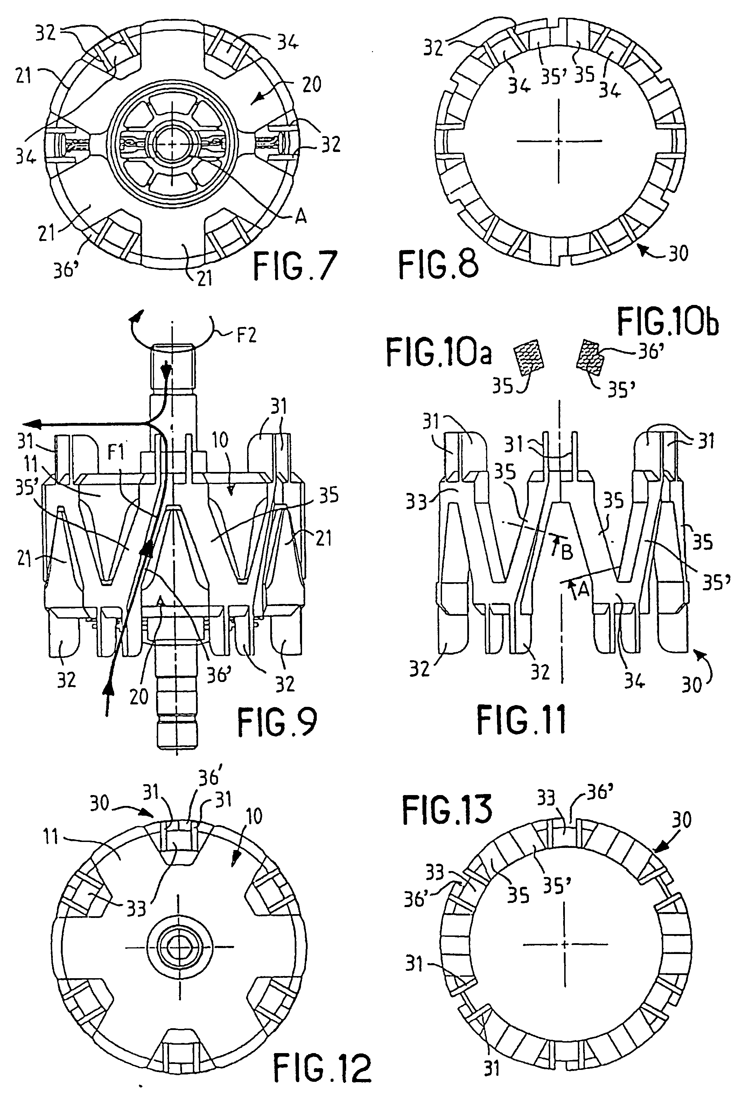

En référence maintenant aux figures 7 à 13, on a représenté une seconde forme de réalisation de l'invention. Celle-ci diffère de la première essentiellement en ce que certains des bras 35 de la pièce 30 sont évidés sur leur longueur pour définir un trajet d'air de ventilation allant du côté arrière de l'alternateur (en bas sur la figure 9) vers le côté avant (en haut).

Plus précisément, certains des bras 35, désignés par la référence 35', possèdent sur leur longueur, au niveau de l'arête entre leur face extérieure et leur face latérale adjacente à une corne polaire 21, un renfoncement 36' de section rectangulaire ou carrée (voir en particulier figure 10b), formant canal, qui s'étend sur la longueur du bras en question et qui traverse également les parties de réunion correspondantes 33, 34 pour déboucher axialement sur la face radiale terminale de la pièce 30, au voisinage des pales 31, 32. Plus précisément, un canal 36' débouche d'un côté entre deux pales adjacentes 31 et de l'autre côté immédiatement à l'extérieur d'un groupe analogue de deux pales adjacentes.

Par rapport au sens de rotation du rotor, indiqué par la flèche F2 sur la figure 9, les bras 35' dans lesquels sont pratiqués les renfoncements 36' sont des bras qui s'étendent, de l'arrière vers l'avant du rotor (c'est-à-dire de bas en haut sur la figure 9), en oblique dans le sens inverse de celui de la rotation. Il peut s'agir de tous les bras ayant cette orientation, c'est-à-dire un sur deux, ou de seulement certains de ces bras. De cette manière, l'orientation des trajets d'air définis par les renfoncements 36' par rapport au sens de rotation du rotor est telle qu'il se crée un flux d'air, indiqué par la flèche F1 sur la figure 9, entre l'arrière et l'avant du rotor, cet air étant ensuite évacué radialement par le ventilateur avant en même temps que l'air introduit axialement du même côté.

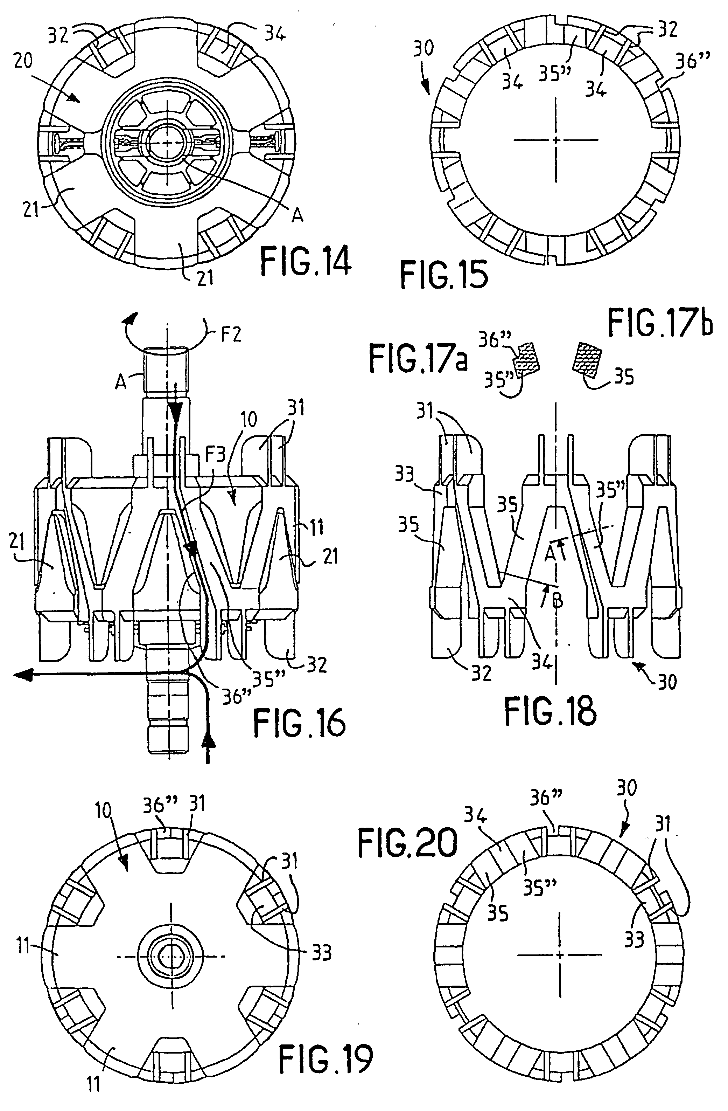

Les figures 14 à 20 illustrent une troisième forme de réalisation de la présente invention, qui se distingue de la seconde essentiellement en ce que les bras dans lesquels sont formés les canaux de ventilation ont une inclinaison opposée à celle des bras 35'. Plus précisément, les bras 35" qui, par rapport au sens de rotation du rotor, s'étendent de l'avant vers l'arrière du rotor en oblique dans le sens inverse de celui de la rotation, comportent des renfoncements 36" qui provoquent un flux d'air de ventilation du côté avant vers le côté arrière du rotor, flux désigné par la flèche F3 sur la figure 16.

Les canaux 36", réalisés sur tous les bras ayant cette orientation, ou seulement sur certains de ceux-ci, débouchent d'un côté entre deux pales adjacentes 32 et de l'autre côté immédiatement à l'extérieur, côté amont, d'un groupe analogue de pales 31.

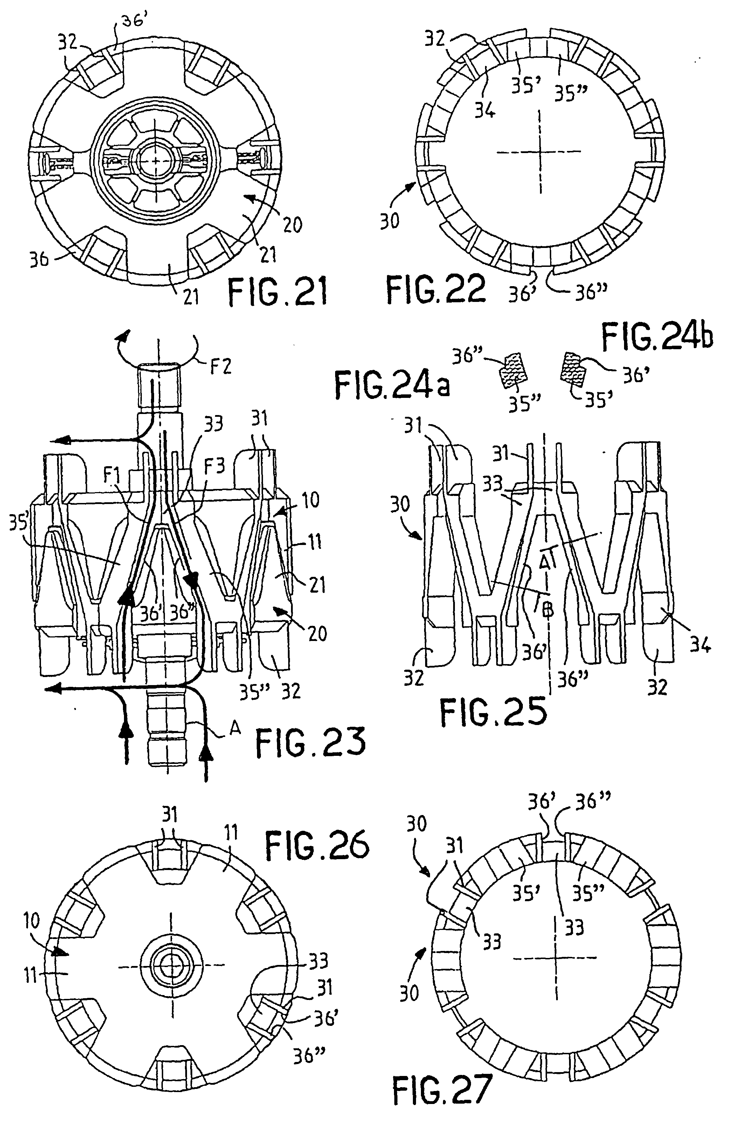

La quatrième forme de réalisation de l'invention, illustrée sur les figures 21 à 27, combine les dispositions des deuxième et troisième formes de réalisation en ce qu'elle comprend, dans les bras 35' ayant la première inclinaison précitée, des canaux 36' de ventilation de l'arrière vers l'avant, et dans les bras 35" ayant la seconde inclinaison précitée, des canaux 36" de ventilation de l'avant vers l'arrière, les canaux 36' et 36" se réunissant, du côté avant, au niveau des parties 33 de réunion entre bras. Bien entendu, ici encore, les bras équipés de canaux peuvent être tous les bras de la pièce 30 ou certains seulement de ces bras.

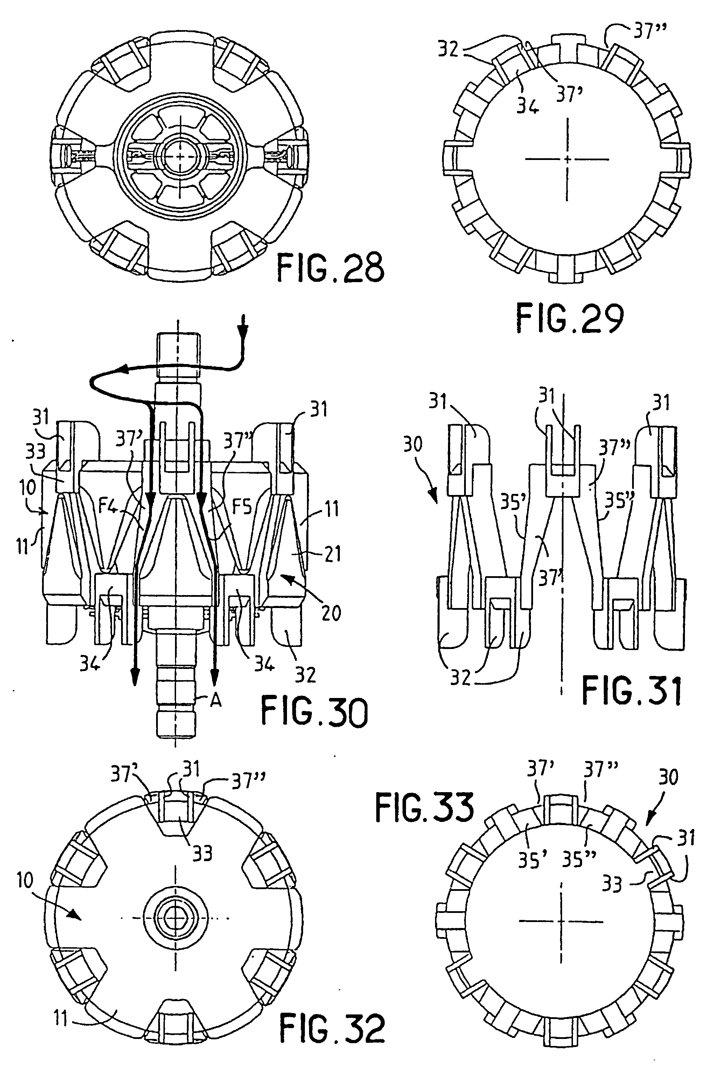

Une cinquième forme de réalisation de l'invention est représentée sur les figures 28 à 33. Dans cette réalisation, on cherche à réaliser un flux d'air de ventilation important du côté avant vers le côté arrière du rotor (du haut vers le bas sur la figure 30). A cet effet, deux bras 35', 35" d'un même "V" pointant vers le côté avant du rotor sont pourvus de renfoncements ou canaux, désignés par les références 37' et 37", dont l'inclinaison par rapport à des plans axiaux est aussi réduite que possible, et dont la section efficace diminue progressivement du côté avant vers le côté arrière.

Plus précisément, chaque canal 37', 37" a pour point de départ une large échancrure située de façon immédiatement adjacente à un groupe de pales 31 de ventilateur avant, d'un côté ou de l'autre de ce groupe, et pour point d'arrivée une échancrure beaucoup plus étroite immédiatement adjacente à un groupe de pales 32 côté arrière, groupe décalé angulairement par rapport au groupe précité de pales 31.

La combinaison de la faible obliquité des canaux d'air 37', 37" avec la variation de leur section provoque un flux d'air de ventilation important, selon les flèches F4 et F5, de l'avant vers l'arrière du rotor.

Bien entendu, la disposition symétrique pourrait être adoptée pour assurer une ventilation importante de l'arrière vers l'avant du rotor.

Dans les deuxième, troisième et quatrième formes de réalisation, les canaux de ventilation 36', 36", 37' ou 37" sont ménagés au niveau des arêtes entre face extérieure (adjacente au stator) et face latérale (adjacente à une corne polaire) du bras considéré.

Bien entendu, cette disposition n'est aucunement limitative, ces canaux pouvant être réalisées en tout autre endroit de la section de chaque bras et par exemple au niveau d'une arête entre face intérieure (adjacente au bobinage de rotor) et face latérale du bras, ou encore uniquement dans sa face extérieure.

Par ailleurs, pour conférer à la pièce 30 davantage de rigidité, celle-ci peut être réalisée par surmoulage sur une âme métallique ou autre, par exemple en acier, de rigidification. Cette âme présente un profil compatible avec la disposition des bras 35 qui accueillent ses différentes sections.

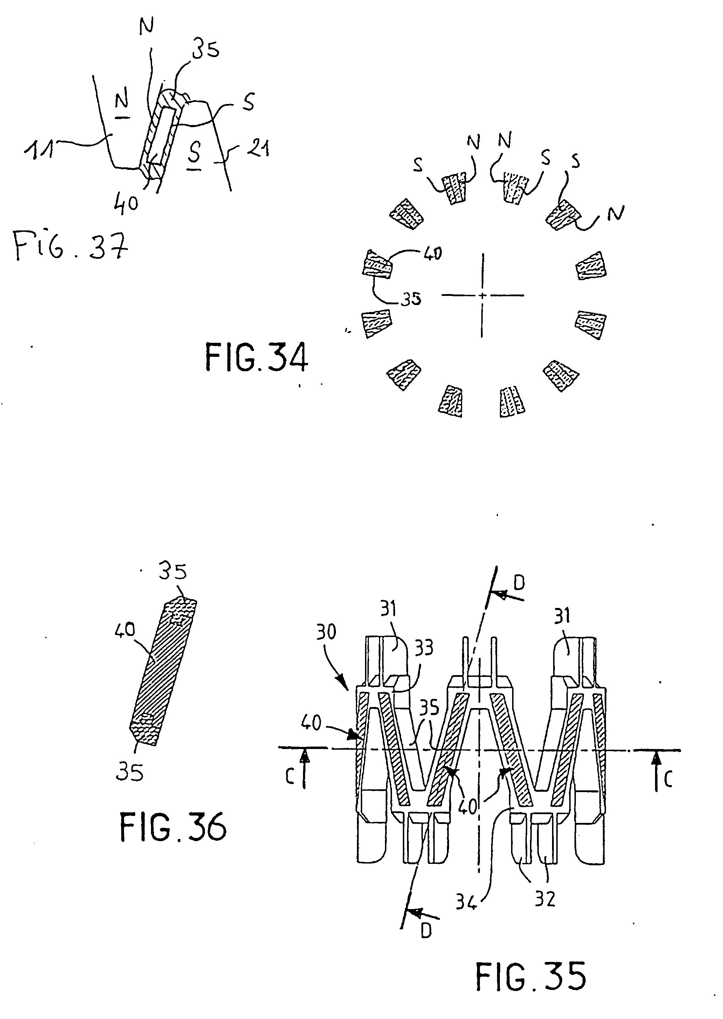

On a représenté sur les figures 34 à 37 une sixième forme de réalisation de la présente invention, dans laquelle la pièce 30 constitue en même temps un support d'éléments magnétiques destinés à accroître le flux rotorique de la machine, et donc son débit en courant.

Plus précisément, chaque bras 35 accueille suivant sa longueur un aimant permanent allongé 40, orienté nord-sud dans sa direction transversale, de manière à présenter une face de polarité Nord située face à une corne polaire Nord et une face de polarité Sud face à la corne polaire adjacente, de polarité Sud également (voir en particulier figure 37). Ces aimants sont affleurants à la surface extérieure de chaque bras.

Ces aimants permanents, en renforçant le flux rotorique, permettent d'assurer en particulier pour les vitesses de rotation élevées de l'alternateur (typiquement 1500 à 5000 tours/minute), un accroissement du rendement pouvant atteindre 20% ou davantage, avec un accroîssement limité du coût de revient.

La pièce 30 pourvue des aimants 40 est réalisée par surmoulage de matière plastique sur les aimants préalablement disposés dans un moule.

La forme des aimants est choisie de manière à assurer un ancrage satisfaisant de ceux-ci dans la matière de la pièce 30 en particulier en direction radiale, de façon à résister à la force centrifuge (voir en particulier figure 36, où la matière plastique du bras 35 pénètre dans des gorges formées aux extrémités longitudinales de l'aimant).

On observera ici que ces aimants permettent dans une certaine mesure également de rigidifier la pièce 30.

## Revendications

1. Alternateur, notamment pour véhicule automobile, du type comprenant un rotor flanqué de deux ventilateurs à pales, monté sur un arbre (A) tournant dans un carter portant un stator, les ventilateurs coopérant avec des ouïes d'entrée et de sortie d'air formées dans le carter pour assurer une ventilation interne dudit alternateur, le rotor comprenant deux roues polaires (10, 20) comportant des cornes polaires (11, 21) imbriquées les unes dans les autres, et l'alternateur comprenant en outre une pièce d'un seul tenant (30) réalisée par moulage de matière plastique et comprenant une ossature (33, 34, 35) s'étendant dans des interstices séparant les cornes polaires adjacentes des deux roues polaires et deux jeux de pales (31, 32) s'étendant vers l'extérieur de part et d'autre de ladite ossature pour définir les deux ventilateurs, alternateur **caractérisé en ce que** la pièce d'un seul tenant (30) comporte des aimants permanents (40) de renforcement de flux rotorique, **en ce que** ladite pièce d'un seul tenant (30) comporte des bras (35) s'étendant entre les cornes polaires adjacentes et réunissant les deux ventilateurs, **en ce que** les aimants permanents (40) sont allongés et logés dans les bras (35) en s'étendant dans la direction longitudinale de ceux-ci, et **en ce que** la pièce d'un seul tenant (30) est surmoulée sur lesdits aimants (40) de telle sorte ces derniers affleurent à la surface extérieure des bras (35).

2. Alternateur selon la revendication 1, **caractérisé en ce que** les faces de polarités opposées des aimants sont tournées respectivement vers les faces en vis-à-vis de deux cornes polaires adjacentes.

3. Alternateur selon l'une des revendications 1 et 2, **caractérisé en ce que** la pièce d'un seul tenant (30) comprend une âme de rigidification et est réalisée par surmoulage sur cette âme.

4. Alternateur selon l'une des revendications 1 à 3, **caractérisé en ce que** l'ossature (33, 34, 35) présente une surface extérieure qui affleure sensiblement avec les faces extérieures des cornes polaires (11, 21), définissant ensemble sensiblement un cylindre de révolution.

5. Alternateur selon l'une des revendications 1 à 4, **caractérisé en ce que** les bras (35) de l'ossature (33, 34, 35) de la pièce d'un seul tenant (30) sont orientés en oblique et forment deux à deux des "V" en convergeant vers des régions de réunion (33, 34) s'étendant respectivement sur deux cercles centrés sur l'axe du rotor et distants l'un de l'autre, et **en ce que** les pales (31, 32) des deux ventilateurs s'étendent à partir des régions de réunion.

6. Alternateur selon la revendication 5,
**caractérisé en ce que** dans au moins certains des bras (35', 35") sont définis des canaux (36', 36"; 37', 37") de circulation d'air entre les deux côtés opposés du rotor.

7. Alternateur selon la revendication 7, **caractérisé en ce que** les canaux (36', 36") sont réalisés dans la face extérieure desdits bras (35', 35") et de façon adjacente à des cornes polaires (11, 21).

8. Alternateur selon la revendication 7, **caractérisé en ce que** les canaux (36', 36") s'étendent en oblique par rapport à des plans axiaux.

9. Alternateur selon l'une des revendications 7 et 8, **caractérisé en ce que** les canaux (37', 37") présentent une section qui diminue d'un côté du rotor vers le côté opposé.

## Patentansprüche

1. Wechselstromgenerator, insbesondere für Kraftfahrzeuge, umfassend einen von zwei Lüftern mit Flügeln flankierten Läufer, der auf einer Welle (A) gelagert ist, die in einem einen Ständer tragenden Gehäuse rotiert, wobei die Lüfter mit Lufteintritts- und Luftaustrittsöffnungen zusammenwirken, die im Gehäuse ausgebildet sind, um eine Innenbelüftung des besagten Wechselstromgenerators herbeizuführen, wobei der Läufer zwei Polräder (10, 20) mit ineinander eingreifenden Polhörnern (11, 21) umfaßt, wobei der Wechselstromgenerator außerdem ein als Formteil aus Kunststoff ausgeführtes und ein Gerippe (33, 34, 35) umfassendes einstückiges Teil (30), das sich in Zwischenräumen erstreckt, die die benachbarten Polhörner der zwei Polräder trennen, und zwei Flügelsätze (31, 32) enthält, die sich beiderseits des besagten Gerippes nach außen erstrecken, um die zwei Lüfter zu definieren, **dadurch gekennzeichnet, daß** das einstückige Teil (30) Permanentmagneten (40) zur Verstärkung des Läuferflusses umfaßt, daß das besagte einstückige Teil (30) Arme (35) umfaßt, die sich zwischen den benachbarten Polhörnern erstrecken und die beiden Lüfter verbinden, daß die Permanentmagneten (40) langgestreckt und in den Armen (35) aufgenommen sind, wobei sie sich in deren Längsrichtung erstrecken, und daß das einstückige Teil (30) auf den besagten Magneten (40) aufgeformt ist, so daß diese bündig mit der Außenfläche der Arme (35) abschließen.

2. Wechselstromgenerator nach Anspruch 1, **dadurch gekennzeichnet, daß** entgegengesetzt gepolten Flächen der Magneten zu den gegenüberliegenden Flächen von zwei benachbarten Polhörnern gerichtet sind.

3. Wechselstromgenerator nach einem der Ansprüche 1 und 2, **dadurch gekennzeichnet, daß** das einstückige Teil (30) einen Versteifungskern umfaßt und durch Aufformen auf diesem Kern ausgeführt ist.

4. Wechselstromgenerator nach einem der Ansprüche 1 bis 3, **dadurch gekennzeichnet, daß** das Gerippe (33, 34, 35) eine Außenfläche aufweist, die in etwa bündig mit den Außenflächen der Polhörner (11, 21) abschließt, die zusammen in etwa einen Rotationszylinder definieren.

5. Wechselstromgenerator nach einem der Ansprüche 1 bis 4, **dadurch gekennzeichnet, daß** die Arme (35) des Gerippes (33, 34, 35) des einstückigen Teils (30) schräg ausgerichtet sind und paarweise "V"-Formen bilden, wobei sie zu Anschlußbereichen (33, 34) hin zusammenlaufen, die sich auf zwei auf die Achse des Läufers zentrierten und zueinander beabstandeten Kreisen erstrecken, und daß sich die Flügel (31, 32) der zwei Lüfter von den Anschlußbereichen aus erstrecken.

6. Wechselstromgenerator nach Anspruch 5, **dadurch gekennzeichnet, daß** wenigstens in einigen der Arme (35', 35") Kanäle (36', 36"; 37', 37") für die Luftzirkulation zwischen den beiden gegenüberliegenden Seiten des Läufers ausgebildet sind.

7. Wechselstromgenerator nach Anspruch 6, **dadurch gekennzeichnet, daß** die Kanäle (36', 36") in der Außenfläche der besagten Arme (35', 35") und an Polhörnern (11, 21) angrenzend ausgeführt sind.

8. Wechselstromgenerator nach Anspruch 7, **dadurch gekennzeichnet, daß** sich die Kanäle (36', 36") bezogen auf axiale Ebenen schräg erstrecken.

9. Wechselstromgenerator nach einem der Ansprüche 7 und 8, **dadurch gekennzeichnet, daß** die Kanäle (37', 37") einen Querschnitt aufweisen, der sich von einer Seite des Läufers zur gegenüberliegenden Seite verringert.

## Claims

1. Alternator, especially for motor vehicles, of the kind comprising a rotor flanked by two bladed fans which is fitted to a shaft (A) turning in a housing carrying a stator, the fans co-operating with air inlet and outlet louvres formed in the housing to allow said alternator to be internally ventilated, the rotor comprising two magnet wheels (10, 20) having pole pieces (11, 21) imbricated into one another, and the alternator also comprising a one-piece component (30) produced by moulding plastics material which comprises a carcass (33, 34, 35) extending in the interstices separating the adjacent pole pieces of the two magnet wheels and two sets of blades (31, 32) extending outwards on either side of said carcass to define the two fans, which alternator is **characterised in that** the one-piece component (30) comprises permanent magnets (40) to strengthen the rotor flux, **in that** said one-piece component (30) comprises arms (35) which extend between the adjacent pole pieces and which join together the two fans, **in that** the permanent magnets (40) are elongated and are housed in the arms (35) to extend in the longitudinal direction thereof, and **in that** the one-piece component (30) is moulded round said magnets (40) such that the latter are flush with the outer faces of the arms (35).

2. Alternator according to claim 1, **characterised in that** the faces of opposite polarities of the magnets are turned towards respective ones of the facing faces of two adjacent pole pieces.

3. Alternator according to either of claims 1 and 2 **characterised in that** the one-piece component (30) comprises a rigidifying core and is produced by being moulded round this core.

4. Alternator according to any one of claims 1 to 3 **characterised in that** the carcass (33, 34, 35) has an outer surface which lies substantially flush with the outer faces of the pole pieces (11, 21), thus together defining substantially a body-of-revolution cylinder.

5. Alternator according to any one of claims 1 to 4, **characterised in that** the arms (35) of the carcass (33, 34, 35) of the one-piece component (30) are obliquely orientated and pairs of them form "V's" which converge towards linking regions (33, 34) which extend around respective ones of two spaced circles centred on the axis of the rotor, and **in that** the blades (31, 32) of the two fans extend from the linking regions.

6. Alternator according to claim 5, **characterised in that** channels (36', 36"; 37', 37") for the circulation of air between the two opposing sides of the rotor are defined in at least certain ones of the arms (35', 35").

7. Alternator according to claim 7, **characterised in that** the channels (36', 36") are formed in the outer faces of said arms (35', 35") to lie adjacent to the pole pieces (11, 21).

8. Alternator according to claim 7, **characterised in that** the channels (36', 36") extend obliquely to axial planes.

9. Alternator according to either of claims 7 and 8, **characterised in that** the cross-section of the channels (37', 37") diminishes from one side of the rotor to the opposite side.
